# EUROPÄISCHE PATENTSCHRIFT

(11) **EP 2 075 167 B1**
(45) Veröffentlichungstag und Bekanntmachung des Hinweises auf die Patenterteilung: **11.04.2012**
(21) Anmeldenummer: 07124185.5
(22) Anmeldetag: 31.12.2007
(51) Int. Cl.: B60R 25/02

(54) **Motorisierte Lenkverriegelungsvorrichtung**
Motor-operated steering lock device
Dispositif de verrouillage de commande motorisé

(43) Veröffentlichungstag der Anmeldung: 01.07.2009
(73) Patentinhaber: Valeo Sicherheitssysteme GmbH, 85253 Erdweg (DE)
(72) Erfinder: Laval Anthony, 85253 Erdweg (DE)
(74) Vertreter: Jacquot, Ludovic R. G.

(56) Entgegenhaltungen:
- WO-A-2007/118840
- FR-A- 2 873 075
- US-B1- 6 295 848

## Beschreibung

Die Erfindung bezieht sich auf eine motorisierte Lenkverrieglungsvorrichtung für ein Kraftfahrzeug.

Zur Lenkverrieglung eines Kraftfahrzeuges sind in den letzten Jahren motorisierte Lenkvetrieglungsvorrichtungen entwickelt worden, welche sich gegenüber den rein mechanischen Lenkradverrieglungen großer Beliebtheit erfreuen.

Wohingegen mechanische Lenkverrieglungen immer in der Nähe des Zündschlosses angebracht werden müssen, können motorisierte Lenkverrieglungen an beliebiger Stelle an der Lenksäule, z. B. in der Nähe des Fußrnumes eines Fahrers angebracht werden.

Dies bietet nicht nur den Vorteil, dass der Bauraum um die Lenksäule herum optimiert genutzt werden kann, sondern erhöht auch die Fahrersicherheit im Falle eines Unfalls, da das Lenkschloss nicht mehr im Kniebereich des Fahrers angeordnet ist.

Eine Solche motorisierte Lenkverrieglungsvorrichtung, welche die Merkmale des Oberbegriffs des Anspruch 1 zeigt wird zum Beispiel im Dokument FR 2 873 075 beschrieben.

Eine solche motorisierte Lenkverrieglungsvorrichtung wird auch zum Beispiel in den Patentschriften DE 199 06 302 oder DE 199 06 267 im Namen der Aumelderin beschrieben. Solche Lenkverrieglungsvorrichtungen umfassen eine motorisierte Einheit, z.B. einen Elektromotor, welche über eine Getriebeeinheit den Sperrbolzen, der in eine Ausnehmung der Lenksäule zur Verrieglung einfährt, ansteuert.

In der DE 199 06 267 wird der Sperrbolzen über einen Spindelantrieb mit einem Mitnehmer gesteuert. Dabei liegen der Sperrbolzen, der Mitnehmer und der Spindelantrieb in Reihe, und bestimmen so die Bauhöhe der gesamten Lenkverrieglungsvorrichtung.

Aufgabe der vorliegenden Erfindung ist es die Bauhöhe der bekannten motorisierten Lenkverrieglungsvorrichtungen zu verringern, um den Bauraum um die Lenksäule herum weiterhin optimieren zu können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die erfindungsgemäße motorisierte Lenkverrieglungsvorrichtung kennzeichnet sich dadurch aus, dass der Sperrbolzen an einem Ende einen T- förmig, einteilig mit dem Sperrbolzen ausgeführten Fortsatz aufweist, der mit einer, an den Schenkelenden jeweils eine Rampe aufweisenden und durch den Motor angetriebenen Gabel der Antriebseinheit kooperiert, um den Sperrbolzen durch eine Hubbewegung von der Verrieglungsstellung in die Ruhestellung zu überführen.

Dadurch kann eine besonders flache Bauweise der motorisierten Lenkverrieglungsvorrichtung erreicht werden. Desweiteren, ist ein zusätzliches Adapterteil durch die direkte Ansteuerung des Sperrbolzens nicht mehr notwendig. Die einteilige Ausführung verringert somit die Anzahl der Bauteile, was kostenmäßige Vorteile bietet und den Zusammenbau in der Endmontage beschleunigt. Es ist damit auch eine direkte Materialkompatibilität erreicht, so dass etwaige Umwelteinflüsse, wie zum Beispiel Temperaturschwankungen, sich nicht mehr negativ auswirken können. Die einteilige Ausbildung erlaubt auch eine optimierte Kraftübertragung von der Antriebseinheit auf den Sperrbolzen.

Die erfindungsmässige Lenkverrieglungsvorrichtung weist vorteilhafterweise ein oder mehrere der folgenden Merkmale auf:
- die Steigung der Rampen am Schenkelendenabschitt ist kleiner als in einem vom Schenkelende entfernten Abschnitt,
- die Steigung der Rampen nimmt in Richtung vom Schenkelende abweisend stetig zu,
- jede Rampe kooperiert mit der Unterseite des T-förmigen Fortsatzes,
- die Unterseite des T-förmigen Fortsatzes weist an den mit den Rampen kooperierenden Stellen eine Kugel oder einen Zylinder drehbar gelagert auf, welche rollend mit der jeweiligen Rampe in Kontakt steht,
- die Gabel ist U-förmig ausgeführt, und die Basis des U weist eine Schiene auf, in die ein von einem Zahnrad getragener Stift eingreift, um die Gabel zwischen den jeweiligen Endstellungen zu bewegen,
- auf die Schenkelenden der Gabel wirkt jeweils eine Druckfeder in Richtung der Basis der Gabel,
- die Rampen sind durch Endanschläge begrenzt sind,
- auf den T-förmigen Fortsatzes wirkt zumindest eine Schubfeder in Richtung der Sperrstellung des Sperrbolzens,
- der T-förmige Fortsatz weist einen Einschnitt auf in den die Schubfeder eingreift.

Weitere erfindungsmäßige Merkmale und Vorteile ergeben sich aus den folgenden, anhand von Figuren erläuterten Ausführungsbeispielen. Es zeigen:
- Figur 1 ist eine seitliche Perspektivansicht der wesentlichen Bauteile der erfindungsgemäßen motorisierten Lenkverrieglungsvorrichtung,
- Figur 2 zeigt das Profil einer Rampe nach einer zweiten Ausbildungsform,
- Figur 3 zeigt das Profil einer Rampe nach einer dritten Ausbildungsform, und
- Figur 4 zeigt eine schematische Draufsicht der erfindungsgemäßen Verrieglungseinrichtung.

Die Erfindung wird im Folgenden anhand der beigefügten Figuren näher beschrieben. In den Figuren werden gleiche Bauteile mit gleichen Referenzzeichen gekennzeichnet.

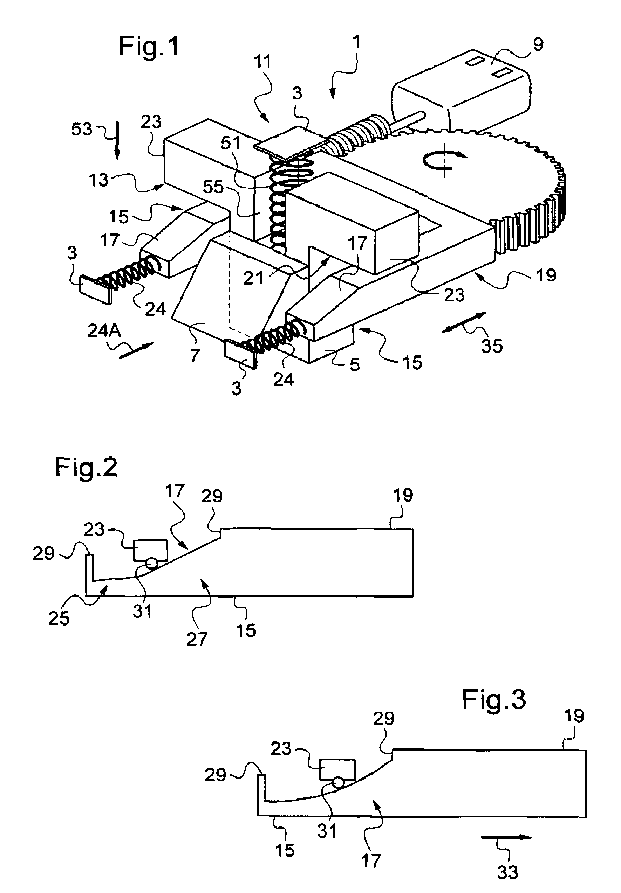

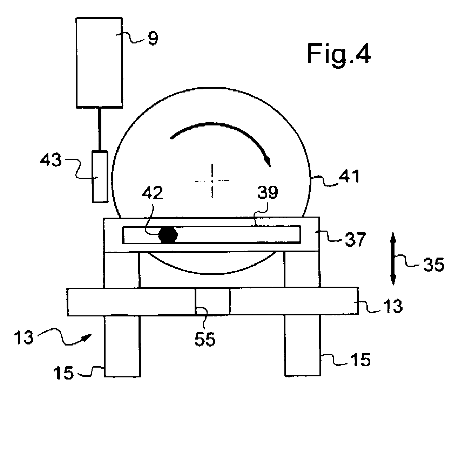

Die Figuren 1 und 4 zeigen einen Teil einer motorisierten Lenkverrieglungsvorrichtung 1 für ein Kraftfahrzeug, welche in einem Gehäuse aufgenommen ist, von dem nur Stützwände 3 schematisch dargestellt sind.

Diese Lenkungsverrieglungsvorrichtung umfasst einen Sperrbolzen 5, der in eine entsprechende Ausnehmung an der Lenkspindel (nicht dargestellt in den Figuren) zur Verrieglung des Lenkrads eines Kraftfahrzeugs eingreifen kann. Der Sperrbolzen ist beweglich in einer Führung 7 angeordnet, so dass er eine Hin- und Herbewegung (auf der Figur von oben nach unten und umgekehrt) ausführen kann.

Die Bewegung des Sperrbolzens 5 wird, zumindest beim Herausziehen aus der Ausnehmung an der Lenkspindel, das heißt zumindest aus einer die Lenkspindel blockierenden Verrieglungsstellung in eine nicht blockierende Ruhestellung, von einer einen Elektromotor 9 umfassenden Antriebseinheit 11 gesteuert.

Erfindungsgemäß weist der Sperrbolzen 5 an einem Ende einen T- förmig, einteilig mit dem Sperrbolzen ausgeführten Fortsatz 13 auf, der mit einer, an den Schenkelenden 15 jeweils eine Rampe 17 aufweisenden und durch den Motor 9 angetriebenen Gabel 19 der Antriebseinheit 11 kooperiert, um den Sperrbolzen 5 durch eine Hubbewegung von der Verrieglungsstellung in die Ruhestellung zu überführen.

Die Rampen 17 stehen in Kontakt mit der Unterseite 21 des T-förmigen Fortsatzes 13 in der Weise, dass die Schultern 23 auf der Gabel 19 gleiten. Vorzugsweise ist die Gabel 19 an den mit dem Fortsatz 13 kooperierenden Stellen mit einer Gleitbeschichtung versehen (z.B. aus Polytetrafluorethylen (Kurzzeichen PTFE) oder Gleitlack), um die Reibungskräfte zu vermindern und einem eventuellen Abrieb vorzubeugen.
Auf die Schenkelenden 15 der Gabel 19 wirkt jeweils eine Druckfeder 24 in Richtung (Pfeil 24A) der Basis der Gabel 19.

In der Ausführungsweise der Figur 1 sind die Rampen 17 einfach ausgeführt mit gleicher linearer Steigung über die gesamte Rampe 17.

Vorzugsweise wird die Rampe 17 jedoch so ausgeführt, dass die Steigung der Rampen 17 am Schenkelendenabschitt 25 kleiner ist als in einem vom Schenkelende entfernten Abschnitt 27, wie dies beispielhaft in Figur 2 dargestellt ist. Dadurch wird den großen Kräften zum Herausziehen des Sperrbolzens Rechnung getragen. In dem späteren Abschnitt 27 ist die Steigung dann größer, so dass der Sperrbolzen bei gleicher Drehzahl des Elektromotors 9 beim Herausfahren beschleunigt wird. Dies hat den Vorteil optimierte Zeiten zum Bewegen des Sperrbolzens 5 zu erzielen, als auch die Gabel kompakter bauen zu können, so dass der notwendige Bauraum für die Lenkverrieglungsvorrichtung noch verringert werden kann.

Im Vergleich zum Ausführungsbeispiel der Figur 1 wird optional vorgeschlagen, dass die Rampen 17 durch Endanschläge 29 begrenzt sind.

Eine weitere optionale Verbesserung sieht vor, wie dies in Figur 2 dargestellt ist, dass die Unterseite 21 des T-förmigen Fortsatzes an den mit den Rampen 17 kooperierenden Stellen eine Kugel oder einen Zylinder 31 drehbar gelagert aufweist, welche rollend mit der jeweiligen Rampe 17 in Kontakt steht. Dadurch können die Reibungskräfte noch weiter verringert werden, so die aufzubringenden Kräfte des Elektromotors 9 auch verringert werden.

Das Ausführungsbeispiel der Rampe 17 in Figur 3 unterscheidet sich von dem der Figur 2 nur dadurch, dass die Steigung der Rampen 17 in Richtung vom Schenkelende 15 abweisend (Pfeil 33) stetig zunimmt. Man kann eine Parabelform oder eine exponentielle Form vorsehen.

Wie aus den Figuren 1 und 4 ersichtlich, ist die Gabel 19 im Wesentlichen U-förmig ausgestaltet.

Um eine Hin- und Herbewegung (siehe Doppelpfeil 35) der Gabel zu erreichen, weist die Basis 37 des U eine Schiene 39 auf, in die ein von einem Zahnrad 41 getragener Stift 42 eingreift, um die Gabel 19 zwischen den jeweiligen Endstellungen zu bewegen. Das Zahnrad 41 wird über ein Schneckenrad 43 vom Motor 9 angetrieben.

Zum Einrasten des Sperrbolzens in die Ausnehmung zur Sperrung des Lenkrads ist zum Beispiel unterstützend eine Schubfeder 51 vorgesehen, welche auf den den T-förmigen Fortsatz 13 des Sperrbolzens 5 in Richtung (Pfeil 53) der Verrieglungsstellung wirkt.

Vorzugsweise weist der T-förmige Fortsatz einen Einschnitt 55 (siehe Figur 1) auf in den die Schubfeder 51 eingreift, wobei deren andres Ende sich am Gehäuse 3 abstützt.

Die Funktionsweise der erfindungsmäßigen Lenkverrieglungsvorrichtung ist wie folgt. In Schließstellung des Sperrbolzens 5 liegt der T-förmige Fortsatz 13 auf den Rampen 17 am Schenkelende 15. Zum Herausfahren der Sperrbolzens 5 setzt sich der Motor 9 in Bewegung, wobei er über das Schneckenrad 43 das Zahnrad 41 antreibt. Dabei gleitet der Stift 42 in der Schiene 39, so dass die Gabel 19 entgegen der Kraft der Federn 24 gedrückt wird und über die Rampen 17 den `C'-fö.rmigen Fortsatz und damit den Sperrbolzen aus der blockierenden Verrieglungsstellung in eine nicht blockierende Ruhestellung drücken.

Es ist auch zu erwähnen, dass mit der vorgeschlagenen Erfindung der Motor nur in eine Drehrichtung betätigt werden muss, so dass aufwendige Elektronik zum Hin- und Herfahren des Motors in beide Drehrichtungen nicht notwendig ist.

Die erfindungmässige Lenkverrieglungsvorrichtung zeichnet sich durch ihre einfache Bauweise, wenige Teile und eine zuverlässige Funktionsweise aus.

## Patentansprüche

1. Motorisierte Lenkverrieglungsvorrichtung (1) für ein Kraftfahrzeug umfassend einen Sperrbolzen (5), der in eine entsprechende Ausnehmung an der Lenkspindel zur Verrieglung des Lenkrads eines Kraftfahrzeugs eingreifen kann und eine, einen Motor (9) umfassende, Antriebseinheit (11), um den Sperrbolzen (5) zumindest aus einer die Lenkspindel blockierenden Verrieglungsstellung in eine nicht, blockierende Ruhestellung zu überführen, wobei der Sperrbolzen (5) mit einer, an den Schenkelenden (15) jeweils eine Rampe (17) aufweisenden und durch den Motor (9) angetriebenen Gabel (19) der Antriebseinheit (11) kooperiert, um den Sperrbolzen (5) durch eine Hubbewegung von der Verrieglungsstellung in die Ruhestellung zu überfuhren, **dadurch gekennzeichnet, dass** die Lenkverrieglungsvorrichtung (1) eine Feder (24) umfasst, die auf die Gabel (19) in Richtung des Basis der Gabel (19) wirkt.

2. Motorisierte Lenkverrieglungsvorrichtung nach Anspruch 1, **dadurch gekennzeichnet, dass** die Steigung der Rampen (17) am Schenkelendenabschitt (25) kleiner ist als in einem vom Schenkelende entfernten Abschnitt (27).

3. Motorisierte Lenkverrieglungsvorrichtung nach Anspruch 2, **dadurch gekennzeichnet, dass** die Steigung der Rampen in Richtung vom Schenkelende abweisend stetig zunimmt.

4. Motorisierte Lenkverrieglungsvorrichtung nach Anspruch 1, **dadurch gekennzeichnet, dass** der Sperrbolzen (5) an einem Ende einen T-förmig, eintellig mit dem Sperrbolzen ausgeführten Fortsatz (13) aufweist und jede Rampe mit der Unterseite (21) des T-förmigen Fortsatzes (13) kooperiert.

5. Motorisierte Lenkverrieglungsvorrichtung nach Anspruch 4, **dadurch gekennzeichnet, dass** die Unterseite (21) des T-förmigen Fortsatzes an den mit den Rampen (17) kooperierenden Stellen eine Kugel oder einen Zylinder (31) drehbar gelagert aufweist, welche rollend mit der jeweiligen Rampe (17) in Kontakt steht.

6. Motorisierte Lenkveirrieglungsvorrichtung nach einem der Ansprüche 1 bis 5, **dadurch gekennzeichnet, dass** die Gabel (19) U-förmig ausgeführt ist, und die Basis (37) des U eine Schiene (39) aufweist, in die ein von einem Zahnrad (41) getragener Stift (42) eingreift, um die Gabel (19) zwischen den jeweiligen Endstellungen (29) zu bewegen.

7. Motorisierte Lenkverrieglungsvorrichtung nach einem der Anspruche 1 bis 6, **dadurch gekennzeichnet, dass** auf die Schenkelenden (15) der Gabel jeweils eine Druckfeder (24) in Richtung der Basis der Gabel (19) wirkt.

8. Motorisierte Lenkverrieglungsvorrichtung nach einem der Ansprüche 1 bis 7, **dadurch gekennzeichnet, dass** die Rampen (17) durch Endanschläge (29) begrenzt sind.

9. Motorisierte Lenkverrieglungsvorrichtung nach einem der Ansprüche 1 bis 8, **dadurch gekennzeichnet, dass** der Sperrbolzen (5) an einem ende einem T-formig, einteilig mit dem Sperrbolzen ausgeführten fortsatz (13) aufweist und auf den T-förmigen Fortsatz (13) zumindest eine Schubfeder (51) in Richtung der Sperrstellung des Sperrbolzens wirkt.

10. Motorisierte Lenkverrieglungsvorrichtung nach Anspruch 9, **dadurch gekennzeichnet, dass** der T-förmige Fortsatz (13) einen Einschnitt (55) aufweist, in den die Schubfeder (51) eingreift.

## Claims

1. Motorized steering lock device (1) for a motor vehicle, comprising a locking bolt (5) which can engage in a corresponding recess in the steering spindle in order to lock the steering wheel of a motor vehicle, and a drive unit (11) including a motor (9) for transferring the locking bolt (5) at least from a locked position which blocks the steering spindle to a non-blocking rest position, the locking bolt (5) cooperating with a fork (19) of the drive unit (11), which fork (19) has a ramp (17) at each of the limb ends (15) and is driven by the motor (9), in order to transfer the locking bolt (5) from the locked position to the rest position through a lifting movement, **characterized in that** the steering lock device (1) comprises a spring (24) which acts on the fork (19) in the direction of the base of the fork (19).

2. Motorized steering lock device according to Claim 1, **characterized in that** the gradient of the ramps (17) is less in the limb end section (25) than in a section (27) remote from the limb end.

3. Motorized steering lock device according to Claim 2, **characterized in that** the gradient of the ramps increases constantly in the direction away from the limb end.

4. Motorized steering lock device according to Claim 1, **characterized in that** the locking bolt (5) has at one end a T-shaped projection (13) which is embodied integrally with the locking bolt and each ramp cooperates with the underside (21) of the T-shaped projection (13).

5. Motorized steering lock device according to Claim 4, **characterized in that** the underside (21) of the T-shaped projection has at the locations cooperating with the ramps (17) a rotatably mounted ball or cylinder (31) which is in rolling contact with the respective ramp (17).

6. Motorized steering lock device according to any one of Claims 1 to 5, **characterized in that** the fork (19) has a U-shaped configuration and the base (37) of the U has a rail (39) in which a pin (42) carried by a gear wheel (41) engages in order to move the fork (19) between the respective end positions (29).

7. Motorized steering lock device according to any one of Claims 1 to 6, **characterized in that** a compression spring (24) acts on each of the limb ends (15) of the fork in the direction of the base of the fork (19).

8. Motorized steering lock device according to any one of Claims 1 to 7, **characterized in that** the ramps (17) are delimited by end stops (29).

9. Motorized steering lock device according to any one of Claims 1 to 8, **characterized in that** the locking bolt (5) has at one end a T-shaped projection (13) which is embodied integrally with the locking bolt and at least one thrust spring (51) acts on the T-shaped projection (13) in the direction of the locked position of the locking bolt.

10. Motorized steering lock device according to Claim 9, **characterized in that** the T-shaped projection (13) has a recess (55) in which the thrust spring (51) engages.

## Revendications

1. Dispositif de verrouillage de direction motorisé (1) pour un véhicule automobile comprenant un boulon de verrouillage (5) qui peut venir en prise dans un évidement correspondant sur la colonne de direction afin de verrouiller le volant de direction d'un véhicule automobile, et une unité d'entraînement (11) comprenant un moteur (9), afin de déplacer le boulon de verrouillage (5) au moins d'une position de verrouillage bloquant la colonne de direction dans une position de repos non bloquante, le boulon de verrouillage (5) coopérant avec une fourche (19) de l'unité d'entraînement (11) présentant sur les extrémités des branches (15) une rampe respective (17) et entraînée par le moteur (9), afin de déplacer le boulon de verrouillage (5) par un mouvement de levage de la position de verrouillage dans la position de repos,
**caractérisé en ce que** le dispositif de verrouillage de direction (1) comprend un ressort (24) qui agit sur la fourche (19) dans la direction de la base de la fourche (19).

2. Dispositif de verrouillage de direction motorisé selon la revendication 1, **caractérisé en ce que** la pente des rampes (17) sur la portion des extrémités des branches (25) est inférieure à une portion (27) éloignée de l'extrémité des branches.

3. Dispositif de verrouillage de direction motorisé selon la revendication 2, **caractérisé en ce que** la pente des rampes augmente de manière constante dans la direction s'éloignant de l'extrémité des branches.

4. Dispositif de verrouillage de direction motorisé selon la revendication 1, **caractérisé en ce que** le boulon de verrouillage (5) présente à une extrémité une saillie (13) en forme de T, réalisée d'une seule pièce avec le boulon de verrouillage, et **en ce que** chaque rampe coopère avec le côté inférieur (21) de la saillie en forme de T (13).

5. Dispositif de verrouillage de direction motorisé selon la revendication 4, **caractérisé en ce que** le côté inférieur (21) de la saillie en forme de T présente, sur les parties coopérant avec les rampes (17), une bille ou un cylindre (31) monté(e) à rotation, qui vient en contact de roulement avec la rampe respective (17).

6. Dispositif de verrouillage de direction motorisé selon l'une quelconque des revendications 1 à 5, **caractérisé en ce que** la fourche (19) est réalisée en forme de U, et la base (37) du U présente un rail (39) dans lequel s'engage une goupille (42) portée par une roue dentée (41), afin de déplacer la fourche (19) entre les positions d'extrémité respectives (29).

7. Dispositif de verrouillage de direction motorisé selon l'une quelconque des revendications 1 à 6, **caractérisé en ce qu'**un ressort de compression (24) respectif agit dans la direction de la base de la fourche (19) sur les extrémités des branches (15) de la fourche.

8. Dispositif de verrouillage de direction motorisé selon l'une quelconque des revendications 1 à 7, **caractérisé en ce que** les rampes (17) sont limitées par des butées de fin de course (29).

9. Dispositif de verrouillage de direction motorisé selon l'une quelconque des revendications 1 à 8, **caractérisé en ce que** le boulon de verrouillage (5) présente à une extrémité une saillie (13) en forme de T, réalisée d'une seule pièce avec le boulon de verrouillage, et **en ce qu'**au moins un ressort de poussée (51) agit sur la saillie (13) en forme de T dans la direction de la position de verrouillage du boulon de verrouillage.

10. Dispositif de verrouillage de direction motorisé selon la revendication 9, **caractérisé en ce que** la saillie (13) en forme de T présente une entaille (55) dans laquelle s'engage le ressort de poussée (51).
